# EUROPÄISCHE PATENTANMELDUNG

(11) **EP 3 410 365 A1**
(43) Veröffentlichungstag der Anmeldung: **05.12.2018**
(21) Anmeldenummer: 17174138.2
(22) Anmeldetag: 02.06.2017
(51) Int. Cl.: G06Q 10/08, G06Q 50/04

(54) **VERFAHREN ZUR AUTOMATISCHEN, COMPUTERGESTÜTZTEN VARIANTENKONFIGURATION EINES TECHNISCHEN PRODUKTS UND NACH DEM VERFAHREN ARBEITENDES SYSTEM**

(71) Anmelder: Siemens Aktiengesellschaft, 80333 München (DE)
(72) Erfinder: Hagge, Nils, 90461 Nürnberg (DE); Nägele, Andreas, 90459 Nürnberg (DE); Le Trung, Arien, 90459 Nürnberg (DE)

(57) **Zusammenfassung**

Die Erfindung ist ein Verfahren zur automatischen, computergestützten Variantenkonfiguration eines technischen Produkts und ein nach dem Verfahren arbeitendes System (20), wobei im Rahmen des Verfahrens automatisch geprüft wird, ob ein als Teilmengenmaske (12) zu einem Merkmalswert (24) eingegebener regulärer Ausdruck eine Teilmenge einer durch einen regulären Ausdruck definierten Obermenge ist, wobei als Obermenge eine durch eine Basismaske (10) oder eine durch eine Restmaske (16) definierte Menge betrachtet wird, wobei die durch die Restmaske (16) definierte Menge eine Teilmenge der durch die Basismaske (10) definierten Menge ist, und im Falle eines positiven Ergebnisses der Prüfung der Merkmalswert (24) zusammen mit der Teilmengenmaske (12) in eine Datenbasis (26) mit Merkmalswerten (24) und Teilmengenmasken (12) übernommen wird.

## Beschreibung

Die Erfindung betrifft eine sogenannte Variantenkonfiguration eines technischen Produkts, nämlich ein Verfahren zur automatischen, computergestützten Variantenkonfiguration eines technischen Produkts, sowie ein System zur Variantenkonfiguration.

Ein einfaches Beispiel für ein technisches Produkt, für das eine Variantenkonfiguration in Betracht kommt, ist ein Tisch, der sich z.B. durch eine jeweilige Anzahl von Tischbeinen, eine Höhe sowie eine Tiefe und eine Breite der Tischplatte auszeichnet. All dies sind Merkmale des Produkts "Tisch" (Produktmerkmale) und unterschiedliche Merkmale führen zu unterschiedlichen Varianten des Produkts. Ein anderes Beispiel für ein technisches Produkt, für das eine Variantenkonfiguration in Betracht kommt, sind Elektromotoren, die sich insbesondere durch einen jeweiligen Leistungsbereich, eine Schutzart, eine Bauform und/oder eine Kühlart sowie eine Achshöhe auszeichnen. Auch hier beschreiben alle genannten Beispiele Merkmale des Produkts "Elektromotor" und unterschiedliche Produktmerkmale führen entsprechend zu unterschiedlichen Varianten des Produkts, also z.B. einem Elektromotor mit einer Achshöhe von 315 mm oder einem Elektromotor mit einer Achshöhe von 450 mm.

Im Rahmen einer Variantenkonfiguration müssen alle Merkmale des jeweiligen Produkts mittels einer Benutzerschnittstelle angelegt und über separate Dialoge klassifiziert werden. Letzteres bedeutet, dass definiert wird, welche diskreten Werte ein Merkmal annehmen kann (z.B. kann vorgesehen sein, dass ein Tisch in Varianten mit einem Tischbein, zwei Tischbeinen oder vier Tischbeinen verfügbar ist). Beim Anlegen eines Merkmals werden zumindest ein Name (z.B. "Tischbein") und ein Datentyp (z.B. "integer" für eine Eingabemöglichkeit ganzzahliger Werte) vereinbart. Das Anlegen eines Merkmals, z.B. des Merkmals "Tischbeine" für das Produkt "Tisch" oder des Merkmals "Achshöhe" für das Produkt "Elektromotor" und die anschließende Klassifizierung des Merkmals, also die Spezifikation, welche diskreten Werte ein Merkmal annehmen kann, wird zusammen als Merkmalsdefinition bezeichnet. Eventuelle Abhängigkeiten verschiedener Merkmale und der jeweiligen Merkmalswerte untereinander sowie auch gegenseitige Ausschlüsse werden über ein "Beziehungswissen" abgebildet. So kann z.B. vorgesehen sein, dass bei einer Auswahl einer einen Schwellwert überschreitenden Breite oder Tiefe der Tischplatte eine Auswahl einer Konfiguration mit einem Tischbein nicht möglich ist und/oder dass bei einer Auswahl einer Konfiguration mit einem Tischbein eine Auswahl einer Breite oder Tiefe der Tischplatte nur bis zu einem jeweils vorgegebenen Schwellwert möglich ist.

Die Formulierung des Beziehungswissens erfolgt z.B. über Auswahlbedingungen, Prozeduren und dergleichen - allgemein mittels dafür vorgesehener Sprachkonstrukte. Jede mit Hilfe solcher Sprachkonstrukte ausgedrückte Abhängigkeit muss über eine eigene Dialogführung dem jeweiligen System mitgeteilt werden.

Die das jeweilige Produkt beschreibenden Produktmerkmale sind in einer maschinenlesbaren Fabrikatbezeichnung zusammengefasst, z.B. in einer Form wie "T4H090B200T080", wobei "T" für das Produkt "Tisch", die Zahl "4" für die Anzahl der Tischbeine und "H090", "B200" und "T080" für die Höhe des Tisches bzw. die Breite und Tiefe der Tischplatte stehen. Bei komplexen Produkten ist eine solche, beinahe im Klartext lesbare Bezeichnung, wie dies hier exemplarisch für den Tisch mit vier Beinen und einer Höhe von 90 cm angegeben wurde, nicht möglich oder würde zu einer Fabrikatbezeichnung mit einer nicht mehr handhabbaren Länge führen. Daher sind Kodierungen üblich und in einer anderen maschinenlesbaren Fabrikatbezeichnung kodiert z.B. das an einer bestimmten Stelle der Fabrikatbezeichnung stehende Zeichen "A" eine Höhe des Tisches von 90 cm: "T4A...". An einer anderen Position innerhalb der Fabrikatbezeichnung kann dasselbe Zeichen ("A") eine bestimmte Breite der Tischplatte kodieren (z.B. 180 cm) während weitere Zeichen (z.B. "B", "C" etc.) eine andere Breite kodieren (z.B. "190 cm", "200 cm" etc.). Dasselbe gilt entsprechend für die Tiefe der Tischplatte. Entsprechend kann z.B. eine Fabrikatbezeichnung in einer Form wie "T4ACB" einen Tisch mit vier Beinen, einer Höhe von 90 cm sowie einer Tischplatte mit einer Breite von 200 cm und einer Tiefe von 80 cm spezifizieren.

Zur Variantenkonfiguration muss also eine eineindeutige (bijektive) Zuordnung zwischen den jeweiligen Produktmerkmalen und deren Kodierung in der Fabrikatbezeichnung existieren.

Eine solche Zuordnung bei komplexen Produkten und entsprechend komplexen Fabrikatbezeichnungen zu gewährleisten, ist aufwändig und fehleranfällig.

In dem grundsätzlich bekannten, von der SAP AG angebotenen SAP-System wird z.B. jedes Produktmerkmal einzeln angelegt und anschließend mit den möglichen Merkmalswerten klassifiziert. Dies erfolgt in einem ersten Schritt ohne Bezug zu anderen Merkmalen oder konkreten Produktvarianten. Abhängigkeiten und Ausschlüsse werden im Nachgang mittels der eingangs erwähnten Sprachkonstrukte modelliert.

Das nachfolgend einkopierte Codefragment zeigt einen Ausschnitt aus einer Prozedur in SAP VC zur Ableitung des Merkmals Achshöhe ("H_AH") aus der im Folgenden mitunter auch nur kurz als MLFB (maschinenlesbare Fabrikatbezeichnung) bezeichneten Fabrikatbezeichnung ("H_MLFB"):

```
 * Ableitung des Merkmalswerts "Achshöhe / Shaft Height"
 $set_default ($self, H_AH, 315) if
   $root.H_MLFB_8 = '3' and $root.H_MLFB_9 = 'A',
 $set_default ($self, H_AH, 355) if
   $root.H_MLFB_8 = '3' and $root.H_MLFB_9 = 'B',
 $set_default ($self, H_AH, 400) if
   $root.H_MLFB_8 = '4' and $root.H_MLFB_9 = 'A',
 $set_default ($self, H_AH, 450) if
   $root.H_MLFB_8 = '4' and $root.H_MLFB_9 = 'B',
```

Nach dem Codefragment werden die achte und neunte Position ("$root.H_MLFB_8"; "$root.H_MLFB_9") einer die MLFB darstellenden Zeichenfolge geprüft. Wenn dort die Zeichen "3" und "A" aufscheinen, bedeutet dies eine in der MLFB kodierte Achshöhe von 315 mm ("set_default ($self, H_AH, 315)". Bei einer Zeichenkombination mit "3" und "B" entspricht dies einer Achshöhe von 355 mm und bei "4" und "A" sowie "4" und "B" einer Achshöhe von 400 mm bzw. 450 mm.

Bei der Ermittlung des Merkmalswerts werden allerdings nur Syntaxfehler erkannt. Vollständigkeit oder Widersprüchlichkeit kann vom System nicht überprüft werden. Darüber hinaus kann das Beziehungswissen nach Abschluss der Eingaben nur stichprobenartig über manuelle Testkonfigurationen auf Korrektheit untersucht werden. Ein Nachweis der Vollständigkeit und Widerspruchsfreiheit ist nicht möglich. Dies führt speziell bei nachträglichen Ergänzungen zum Beziehungswissen zu einem hohen Testaufwand. Daher wird bei Änderungen oftmals auch das sogenannte Vier-Augen-Prinzip angewandt. Nachteilig ist der damit verbundene Aufwand. Generell lässt sich eine ausreichende Testabdeckung nur mittels manueller iterativer Prozesse (Teamarbeit, wiederholte Einzelarbeit, Erhöhung der Anzahl der Stichproben) erreichen.

Aus der EP 1 251 444 A1 ist ein Verfahren bekannt, welches die Konfiguration einer Variante eines Produkts im Zusammenhang mit einer Auswahl des Produkts und dessen Bestellung durch einen Kunden vereinfachen soll. Dazu werden unter anderem CAD-Daten verwendet, über welche der Anbieter des Produkts bereits verfügt. Der Ansatz in der EP 1 251 444 A1 verfolgt jedoch das Ziel, die zur Variantenkonfiguration auf Herstellerseite erforderlichen Informationen über Merkmale und deren Beziehungen untereinander leichter erstellen zu können und deren Vollständigkeit und Widerspruchsfreiheit ohne aufwändige manuelle Tests zu erreichen.

Ein sogenanntes K-Modell der Brinkop Consulting UG, Oberschlettenbach (DE) verwendet eine spezielle Art sogenannter Mindmaps zur Erarbeitung des Produkt- und Beziehungswissens (dort Konfigurationsmodell genannt) und definiert dafür einen in Einzel- oder Gruppenarbeit zu erledigenden Modellierungsprozess. Automatische Kontrollmöglichkeiten der Vollständigkeit und Widerspruchsfreiheit sind ebenfalls nicht vorhanden.

Die vorliegende Erfindung schlägt eine Möglichkeit vor, mittels derer eine erhebliche Reduzierung des Aufwands und der Fehleranfälligkeit möglich ist.

Diese Aufgabe wird erfindungsgemäß dadurch gelöst, dass im Rahmen der Variantenkonfiguration zur Merkmalsdefinition reguläre Ausdrücke verwendet werden. Konkret wird die Aufgabe mittels eines Verfahrens zur automatischen, computergestützten Variantenkonfiguration eines technischen Produkts mit den Merkmalen des Anspruchs 1 gelöst. Bei einem solchen Verfahren ist vorgesehen, dass dieses zumindest die folgenden Schritte umfasst:
- Prüfen, ob ein im Rahmen einer Merkmalsdefinition als Teilmengenmaske zu einem Merkmalswert eingegebener regulärer Ausdruck eine Teilmenge einer durch einen regulären Ausdruck definierten Obermenge ist, und
- Übernehmen des Merkmalswerts zusammen mit der Teilmengenmaske in eine Datenbasis mit Merkmalswerten und Teilmengenmasken, wenn das Ergebnis der Prüfung positiv ist.

Als Obermenge wird im Rahmen des Verfahrens eine durch eine vorgegebene oder vorgebbare Basismaske definierte Menge oder eine durch eine Restmaske definierte Menge betrachtet, wobei die durch die Restmaske definierte Menge eine Teilmenge der durch die Basismaske definierten Menge ist, also der durch die Basismaske definierten Menge entspricht oder eine echte Teilmenge der durch die Basismaske definierten Menge ist. Wie sich bei einer Betrachtung der Restmenge diese aus der Basismaske oder der durch die Basismaske definierten Menge ergibt, ist Gegenstand spezieller Ausführungsformen der Erfindung.

Bei einer Ausführung des Verfahrens erfolgt also durch einen Anwender des Verfahrens im Rahmen einer Merkmalsdefinition eine Eingabe eines Merkmalswerts und eine Eingabe einer Teilmengenmaske zu diesem Merkmalswert. Die Teilmengenmaske wird als regulärer Ausdruck eingegeben. Im Rahmen des Verfahrens erfolgt sodann eine automatische Prüfung der eingegebenen Teilmengenmaske. Die Art der Prüfung ist weiter unten mit weiteren Einzelheiten beschrieben. Wenn das Ergebnis der Prüfung positiv ist, wird der eingegebene Merkmalswert zusammen mit der zugehörigen Teilmengenmaske in eine Datenbasis übernommen. Diese enthält jeweils Kombinationen zulässiger Merkmalswerte und zugehöriger Teilmengenmasken. Durch die Prüfung jeder Teilmengenmaske bei deren Eingabe ist sichergestellt, dass die Datenbasis nur zulässige Teilmengenmasken und damit insgesamt eine widerspruchsfreie Variantenkonfiguration enthält.

Die Erfindung geht davon aus, dass die für eine maschinenlesbare Fabrikatbezeichnung verwendbaren Zeichenketten als eine Menge, nämlich als eine Menge im Sinne der Mengenlehre, betrachtet werden. Die Basismaske beschreibt die Menge aller möglichen Zeichenketten sogenannten Wörter für eine einer maschinenlesbaren Fabrikatbezeichnung des jeweiligen Produkts. Eine bestimmte Ausprägung einer solchen Zeichenkette wird in der Fachsprache auch als "Wort" bezeichnet. Durch die Menge aller zulässigen Wörter ergibt sich auch, welche Zeichen jeweils an den einzelnen Stellen der Fabrikatbezeichnung möglich sind. sowie durch jedes einzelne Wort die jeweils zugelassenen Zeichen. Indem als Basismaske ein regulärer Ausdruck verwendet wird, definiert dieser nicht nur die zugelassenen Zeichen, sondern auch das Format jeder möglichen maschinenlesbaren Fabrikatbezeichnung, indem z.B. mittels des regulären Ausdrucks und eines dortigen Worts vorgegeben ist, dass die erste Stelle der Fabrikatbezeichnung stets eine Ziffer oder dass die erste Stelle der Fabrikatbezeichnung exakt die Ziffer "1" ist. Indem der reguläre Ausdruck für jede Stelle einer möglichen maschinenlesbaren Fabrikatbezeichnung die dort zugelassenen Zeichen definiert, definiert der reguläre Ausdruck durch die einzelnen Worte im Grunde eine geordnete Gruppe von Mengen, wobei eine erste Menge die an einer ersten Stelle der Fabrikatbezeichnung verwendbaren Zeichnen definiert, eine zweite Menge die an einer zweiten Stelle der Fabrikatbezeichnung verwendbaren Zeichnen definiert, eine dritte Menge die an einer dritten Stelle der Fabrikatbezeichnung verwendbaren Zeichnen definiert usw.

Eine im Rahmen des Verfahrens in Form eines regulären Ausdrucks eingegebene Teilmengenmaske beschreibt das Format und die Menge aller derjenigen Zeichen, die als Fabrikatbezeichnung genau eine Variante des jeweiligen technischen Produkts bezeichnen. Indem bezüglich der zu einem Merkmalswert eingegebenen Teilmengenmaske, wobei der Merkmalswert eine Variante des jeweiligen Produkts charakterisiert, geprüft wird, ob die Teilmengenmaske eine Teilmenge der vorgenannten Obermenge ist, lässt sich automatisch sicherstellen, dass die Fabrikatbezeichnung dem durch die Basismaske vorgegebenen Format genügt.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens zur automatischen, computergestützten Variantenkonfiguration eines technischen Produkts nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Eine Fabrikatbezeichnung muss eindeutig sein. Eine im Rahmen einer Variantenkonfiguration durch eine eingegebene Teilmengenmaske definierte Fabrikatbezeichnung kann daher nicht zur Bezeichnung einer anderen Variante desselben Produkts verwendet werden. Bei einer Ausführungsform des Verfahrens wird daher nach einer Eingabe einer Teilmengenmaske durch Subtraktion eine Restmaske gebildet. Die Restmaske wird z.B. gebildet, indem die durch die Basismaske definierte Menge um die durch die oder jede Teilmengenmaske definierte Menge vermindert wird und als Restmaske ein die resultierende Restmenge definierender regulärer Ausdruck gebildet wird. Alternativ wird die Restmaske gebildet, indem als Restmaske anfänglich die Basismaske übernommen wird und nach jeder Eingabe einer Teilmengenmaske die durch die Basismaske definierte Menge um die durch die jeweilige Teilmengenmaske definierte Menge vermindert wird und als Restmaske ein die resultierende Restmenge definierender regulärer Ausdruck gebildet wird.

Durch die Verwendung einer solchen Restmaske zur Definition der Obermenge scheiden nach jeder Eingabe einer Teilmengenmaske die darin enthaltenen Wörter aus der Obermenge aus, so dass implizit sichergestellt ist, dass im Rahmen der Variantenkonfiguration eine widerspruchsfreie Variantenkonfiguration entsteht. Ohne die Verwendung einer solchen Restmaske bliebe nur eine aufwändige, ggf. manuelle Prüfung, was mittels der hier vorgeschlagenen Neuerung gerade vermieden werden soll.

Bei einer besonderen Ausführungsform ist im Rahmen des Verfahrens sichergestellt, dass im Falle einer leeren Restmaske keine Eingabe eines weiteren Merkmalswerts und/oder einer zugehörigen Teilmengenmaske mehr möglich ist. Dann ist sichergestellt, dass eine nicht widerspruchsfreie Variantenkonfiguration nicht eingegeben werden kann. Zudem ist eine leere Restmaske ein automatisch ermittelbares Abbruchkriterium für eine Merkmalsdefinition im Rahmen der Variantenkonfiguration.

Bei einer weiteren Ausführungsform des Verfahrens werden zu der Basismaske und/oder der Restmaske eine Anzahl der mittels der Basismaske bzw. der Restmaske kodierbaren Varianten des Produkts angezeigt. Dies verschafft dem Anwender der Variantenkonfiguration eine hilfreiche Übersicht über die verfügbaren Kodierungsmöglichkeiten.

Bei einer besonderen Ausführungsform des Verfahrens werden alle im Rahmen einer Merkmalsdefinition eingegebenen Teilmengenmasken auf eine Überschneidung der jeweils definierten Mengen geprüft. Im Falle einer festgestellten Überschneidung wird automatisch ein Warnhinweis ausgegeben und die die Überschneidung auslösende Teilmengenmaske wird nicht in die Datenbasis übernommen. Auch dies gewährleistet eine implizit widerspruchsfreie Variantenkonfiguration.

Die oben genannte Aufgabe wird auch mittels eines Systems zur Variantenkonfiguration eines technischen Produkts gelöst, welches nach dem Verfahren wie hier und im Folgenden beschrieben arbeitet und dazu Mittel zur Durchführung des Verfahrens umfasst. Das im Folgenden beschriebene Verfahren ist zur automatischen Ausführung in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein System zur Variantenkonfiguration mit einem Speicher und einem Mikroprozessor oder dergleichen, wobei in den Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Der Vorteil der Erfindung und ihrer Ausgestaltungen besteht damit insbesondere darin, dass durch die hier vorgeschlagene softwareunterstützte Vorgehensweise sämtliche Tests und speziell ein manuelles Ausprobieren ausgewählter Testfälle zur Prüfung der Korrektheit (im Sinne der Vollständigkeit und Widerspruchsfreiheit) einer Merkmalsdefinition entfallen. Dabei besteht der Vorteil nicht nur darin, dass der Aufwand für das Testen entfällt, sondern auch in der Qualität der Korrektheitsaussage an sich. Durch manuelles Testen konnte vormals nur bewiesen werden, dass eine Merkmalsdefinition falsch war. Die Richtigkeit konnte hingegen nur vermutet werden, wenn eine gewisse Anzahl an Tests erfolgreich absolviert wurde. Der hier vorgeschlagene Ansatz stützt sich hingegen auf mathematische Aussagenlogik und Mengenalgebra. Möglich wird dies durch die eindeutige Verschlüsselung aller Produktvarianten mittels der Basismaske einerseits und andererseits durch die Tatsache, dass die Basismaske als regulärer Ausdruck eine Struktur aufweist, die sich an den Merkmalsausprägungen einer Produktreihe orientiert. Dadurch ergibt sich die Möglichkeit, das Produkt mittels kompakter regulärer Ausdrücke anhand seiner Merkmale in Cluster zu unterteilen und diese als Gruppen zu klassifizieren.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die z.B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Es zeigen:
- FIG 1: ein Eingabefenster einer Benutzeroberfläche für ein Computerprogramm mit einer Implementation des hier vorgeschlagenen Verfahrens,
- FIG 2 bis FIG 4: Momentaufnahmen bei einer Merkmalsdefinition gemäß dem hier vorgeschlagenen Verfahren,
- FIG 5: eine als Warnhinweis fungierende Darstellungsmöglichkeit im Falle einer nicht zulässigen und im Rahmen des vorgeschlagenen Verfahrens automatisch als nicht zulässig erkennbaren Eingabe,
- FIG 6: eine schematisch vereinfachte Darstellung eines Systems zur automatischen, computergestützten Variantenkonfiguration eines technischen Produkts und
- FIG 7: eine schematisch vereinfachte Darstellung eines Computerprogramms mit einer Implementation des vorgeschlagenen Verfahrens.

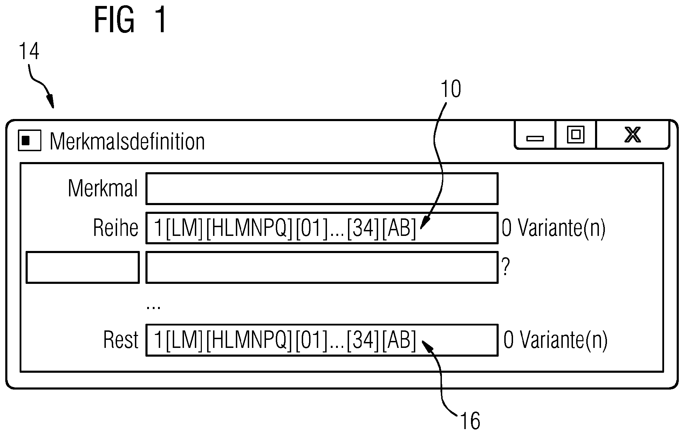

Der hier vorgeschlagene Ansatz gestattet dem Anwender der Variantenkonfiguration eine einfache Eingabe neuer Merkmale (Produktmerkmale) sowie deren Klassifizierung mit direkter Rückmeldung, ob die Angaben eindeutig und/oder vollständig sind. Dies basiert darauf, dass über einen im Folgenden zum Zwecke der Unterscheidung als Basismaske 10 (FIG 1) bezeichneten sogenannten regulären Ausdruck alle gültigen Fabrikatbezeichnungen einer Produktreihe definiert werden und bei der Merkmalsdefinition für jeden Merkmalswert mittels eines weiteren regulären Ausdrucks spezifiziert wird, bei welchen Varianten das Merkmal diesen Wert annimmt. Dieser mit jeweils genau einem Merkmalswert verbundene weitere reguläre Ausdruck wird zur Unterscheidung von der Basismaske 10 im Folgenden als Teilmengenmaske 12 bezeichnet.

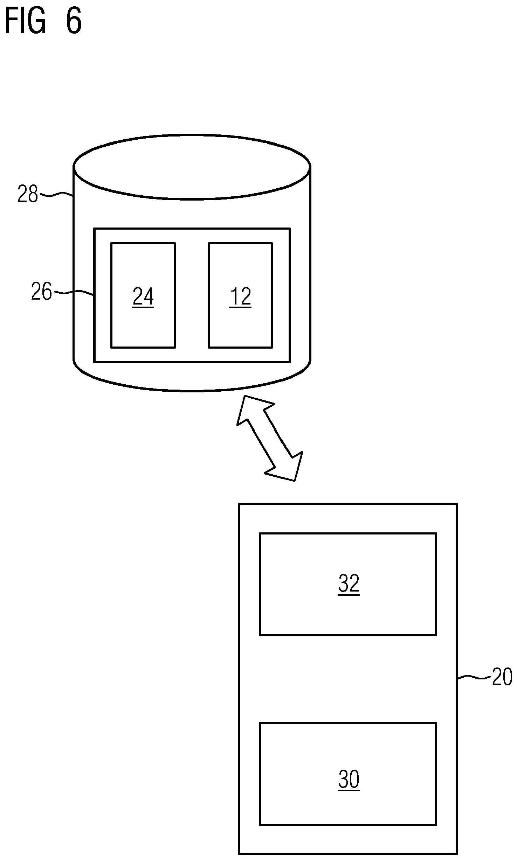

Die Darstellungen in den Figuren (FIG 1 bis FIG 5) zeigen exemplarisch eine mögliche Darstellung einer Benutzerschnittstelle 14 der Variantenkonfiguration sowie die an einem Bildschirm eines Systems 20 (FIG 6) zur Variantenkonfiguration während der Variantenkonfiguration angezeigten Eingabefenster.

In einem Eingabefenster der Benutzerschnittstelle 14 erscheint zu Beginn der Merkmalsdefinition die Basismaske 10, also der reguläre Ausdruck, welche alle gültigen Produktvarianten des jeweiligen Produkts beschreibt. Bei der Klassifizierung eines Merkmalswerts erscheint optional ein weiterer regulärer Ausdruck, welcher diejenigen Varianten beschreibt, auf welche die Klassifizierung nicht zutrifft. Dieser wird zur Unterscheidung von der Basismaske 10 als Restmaske 16 bezeichnet. Zu Beginn einer Merkmalsdefinition entspricht die Restmaske 16 der Basismaske 10. Bei jeder weiteren Klassifizierung eines Merkmalswerts wird die Restmaske 16 so neu generiert, dass diese nur noch die verbleibenden Varianten umfasst. Ergibt sich hier für die Restmaske 16 der "leere" Ausdruck, bedeutet dies, dass das Merkmal vollständig für alle Varianten definiert ist. Ebenfalls wird geprüft, dass es zwischen den regulären Ausdrücken der einzelnen Merkmalsklassifizierungen keine Überschneidungen (Konflikte) gibt. Im Falle einer solchen Überschneidung stehen die die Überschneidung hervorrufenden Klassifizierungen in Widerspruch. Gibt es keine solche Überschneidung, ist die Merkmalsdefinition insgesamt widerspruchsfrei.

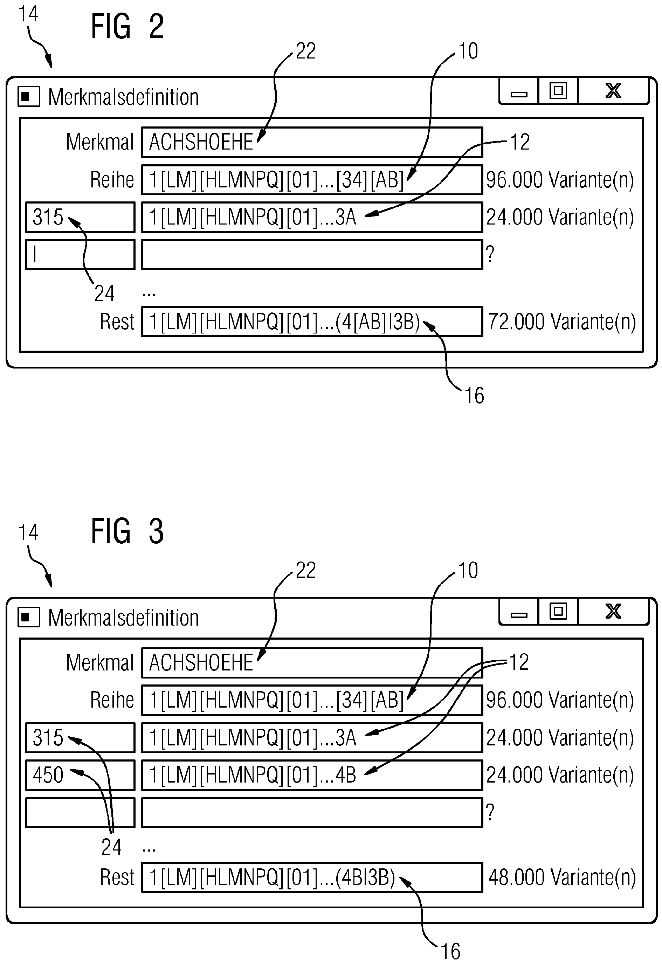

Die exemplarisch gezeigte Basismaske 10 ist entsprechend der an sich bekannten Regeln für reguläre Ausdrücke wie folgt zu lesen: Die erste Position/das erste Zeichen einer zu der Basismaske 10 passenden maschinenlesbaren Fabrikatbezeichnung (MLFB) ist fix und hat stets den Wert "1". Als zweites Zeichen einer zu der Basismaske 10 passenden MLFB kommt alternativ entweder das Zeichen "L" oder das Zeichen "M" in Betracht (die Menge der möglichen Zeichen ist in der Basismaske 10 durch den Ausdruck "[LM]" definiert). Als drittes Zeichen einer zu der Basismaske 10 passenden MLFB kommt ein Zeichen aus der in der Basismaske 10 definierten Menge "[HLMNPQ]" in Betracht. Als viertes Zeichen einer zu der Basismaske 10 passenden MLFB kommt alternativ entweder das Zeichen "0" oder das Zeichen "1" in Betracht (die Menge der möglichen Zeichen ist durch den Ausdruck "[01]" definiert). - Bezüglich des Ausdrucks "[HLMNPQ]" ist darauf hinzuweisen, dass in den Darstellungen in den nachfolgenden Figuren (FIG 2 bis FIG 5) im Interesse der Übersichtlichkeit eine alphabetisch sortierte Reihenfolge der davon umfassten Zeichen gewählt wurde. Bekanntlich gilt für die einzelnen Worte eines regulären Ausdrucks das Kommutativgesetz ([AB] = [BA]), so dass anstelle der gezeigten Reihenfolge auch andere Reihenfolgen derselben Zeichen möglich sind und zu demselben Ergebnis führen.

Die Definitionen für das fünfte, sechste und siebente Zeichen einer zu der Basismaske 10 passenden MLFB sind im dargestellten Beispiel jeweils mittels eines in einem regulären Ausdruck zugelassenen "Platzhalters" erfolgt. Das Zeichen "." erlaubt jedes Zeichen des jeweils zugelassenen Grundalphabets, also z.B. eine Eingabe einer Ziffer von "0" bis "9". Zur Anknüpfung an das eingangs genannte Beispiel stehen im Folgenden - allerdings lediglich exemplarisch - das achte und das neunte Zeichen einer zu der Basismaske 10 passenden MLFB im Vordergrund.

Als achtes Zeichen einer zu der Basismaske 10 passenden MLFB kommt alternativ entweder das Zeichen "3" oder das Zeichen "4" in Betracht (die Menge der möglichen Zeichen ist in der Basismaske 10 durch den Ausdruck "[34]" definiert). Als neuntes Zeichen einer zu der Basismaske 10 passenden MLFB kommt alternativ entweder das Zeichen "A" oder das Zeichen "B" in Betracht (die Menge der möglichen Zeichen ist durch den Ausdruck "[AB]" definiert).

Die Darstellung in FIG 2 zeigt die Benutzerschnittstelle 14 zu Beginn einer Merkmalsdefinition. Die Merkmalsdefinition geht von der Basismaske 10 aus, einem vorgegebenen regulären Ausdruck, welcher alle gültigen MLFBs einer jeweiligen Produktreihe umfasst. Die Merkmalsdefinition erfordert zum Zwecke der Identifikation des jeweiligen Merkmals eine Vergabe eines eindeutigen Bezeichners 22 des jeweiligen Merkmals. Die Vergabe des Bezeichners 22 erfolgt im Rahmen der Merkmalsdefinition z.B. in einem ersten Schritt. Im Beispiel wird als Bezeichner 22 des zu definierenden Merkmals der Text "ACHSHOEHE" eingegeben. Das nach dem hier gewählten Beispiel zu definierende Merkmal bezieht sich demnach auf die Achshöhe eines Elektromotors und im Folgenden wird entsprechend mitunter kurz nur der Begriff "Achshöhe" zur Bezugnahme auf das Merkmal Achshöhe verwendet.

Indem die Basismaske 10 alle gültigen Fabrikatbezeichnungen umfasst, umfasst sie auch alle Schlüssel, für die das jeweilige Merkmal, hier die Achshöhe, klassifiziert werden soll. Optional wird anhand der Basismaske 10 bestimmt, wie viele Varianten durch diese beschrieben werden (FIG 2: Text "96.000 Variante(n)"). Die Anzahl der Varianten ergibt sich aus der Anzahl der verschiedenen Wörter, welche die Basismaske 10 beschreibt, und im vorliegenden Beispiel (durch Multiplikation der nachfolgend aufgeführten Faktoren) wie folgt: 1 (wegen "1"), 2 (wegen "[LM]"), 6 (wegen "[HLMNPQ]"), 2 (wegen "[01]"), 10 (wegen "."), 10 (wegen "."), 10 (wegen "."), 2 (wegen "[34]") und 2 (wegen "[AB]"). Dies führt zu dem Ausdruck 1 x 2 x 6 x 2 x 10 x 10 x 10 x 2 x 2 = 96.000. Dies unterstützt den Anwender bei der Formulierung der Basismaske 10 und der späteren Formulierung einer Teilmengenmaske 12, denn die ermittelte Anzahl vermittelt ihm ein Gefühl für die Menge von Varianten, die darstellbar und/oder zu betrachten sind. Zusätzlich oder alternativ wird optional ermittelt und als Restmaske 16 ausgegeben, welche und wie viele Varianten noch nicht klassifiziert sind. Diese Angabe erscheint z.B. unten im Eingabefenster und ist im dargestellten Beispiel mit dem Text "Rest" beschriftet.

Die Darstellung in FIG 2 zeigt das Eingabefenster im Anschluss an eine Eingabe der Grundinformationen (Basismaske 10; Bezeichner 22). Hier beginnt die Merkmalsdefinition.

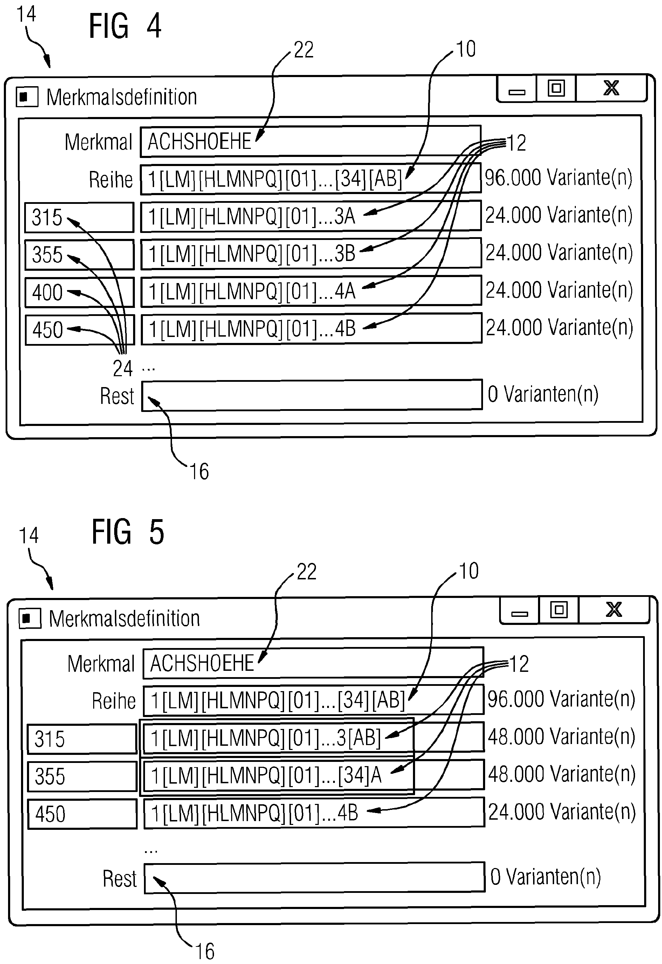

Im dargestellten Beispiel wird für das Merkmal (Produktmerkmal) "Achshöhe" als erster möglicher Merkmalswert 24 die Zahl "315" festgelegt. Daneben (im Eingabefenster in derselben Zeile) wird in Form eines zur Unterscheidung von der Basismaske 10 als Teilmengenmaske 12 bezeichneten weiteren regulären Ausdrucks spezifiziert, für welche Varianten einer MLFB das Merkmal "Achshöhe" diesen Wert (hier "315", also 315 mm) annehmen soll. Der als Teilmengenmaske 12 eingegebene reguläre Ausdruck wird während der Eingabe ohne Zutun des Anwenders insbesondere in Echtzeit auf eine korrekte Syntax geprüft sowie daraufhin geprüft, dass dieser eine Teilmenge der durch die Basismaske 10 definierten Menge definiert. Optional wird ausgegeben, auf wie viele Varianten diese Definition zutrifft (FIG 2: Text "24.000 Variante(n)"). Optional wird alternativ oder zusätzlich gleichzeitig die Menge der verbleibenden, unklassifizierten Varianten aktualisiert (FIG 2: Text "72.000 Variante(n)"). Wenn noch unklassifizierte Varianten verbleiben, wird in dem Eingabefenster eine neue Zeile zur Klassifizierung eines weiteren Merkmalswerts 24 freigegeben (FIG 3) und der Vorgang wiederholt sich, bis alle zu Beginn definierten Varianten ausklassifiziert sind und die Menge der verbleibenden Varianten in der Restmaske 16 leer ist (FIG 4). Auf diese Weise ist auch gleich implizit im Hintergrund bewiesen, dass das Merkmal voll ausklassifiziert ist und es keine Definitionslücken gibt. Ein Test, speziell ein stichprobenartiges manuelles Ausprobieren von Testfällen, kann komplett entfallen. Alternativ kann der Anwender die Merkmalsdefinition auch abbrechen, z.B. dann, wenn die Anzahl der zu klassifizierenden Merkmalswerte 24 kleiner ist als die nach der Basismaske 10 zulässige Anzahl.

Zur weiteren Erläuterung wird zunächst die zuerst eingegebene Teilmengenmaske 12 ("1[LM][MLQPHN][10]...3A") betrachtet. Erkennbar umfassen die Basismaske 10 und die Teilmengenmaske 12 einzelne, jeweils eine Position definierende Ausdrücke ("1", "[LM]", "[MLQPHN]" ... "[34]" und "[AB]" bzw. "1", "[LM]", "[MLQPHN]" ... "3" und "A").

Viele Ausdrücke der eingegebenen Teilmengenmaske 12 entsprechen ersichtlich denen der Basismaske 10. Unterschiede bestehen hinsichtlich der beiden letzten Ausdrücke. Dort umfasst die Teilmengenmaske 12 die Zeichen/Ausdrücke "3" und "A". Hier handelt es sich um Zeichen, welche gemäß der Definition der Basismaske 10 an diesen Stellen zulässig sind (Mengendefinitionen "[34]" und "[AB]" in der Basismaske 10). Die Teilmengenmaske 12 umfasst - auch wenn dies grundsätzlich möglich wäre - keine Mengenangaben, sondern definiert, dass das achte Zeichen eine "3" und das neunte Zeichen ein "A" ist. Jede MLFB, die zu dieser Teilmengenmaske 12 passt, gehört zu dem Merkmalswert 24 mit dem Inhalt "315" und zu einem Produkt mit einer Achshöhe von 315 mm.

Die Restmaske 16 ergibt sich aus der Basismaske 10 gewissermaßen durch "Subtraktion" der oder jeder im Rahmen einer Merkmalsdefinition spezifizierten Teilmengenmaske 12 von der Basismaske 10. Im vorliegenden Fall sind für die achte und neunte Position einer weiteren Teilmengenmaske 12 noch die Zeichen "3" und "B" sowie bei einer "4" an der achten Position für die neunte Position noch die Zeichen "A" und "B" möglich (regulärer Ausdruck "(4[AB]13B)" am Ende der Restmaske 16).

Die mit "3A" begonnene Merkmalsdefinition erlaubt also noch eine Definition weiterer Merkmale. Vorliegend sind dies die Merkmale/Achshöhen 450 mm (FIG 3, FIG 4; Teilmengenmaske 12: "1[LM][MLQPHN][10]...4B") sowie 355 mm (FIG 4; Teilmengenmaske 12: "1[LM][MLQPHN][10]...3B") und 400 mm (FIG 4; Teilmengenmaske 12: "1[LM][MLQPHN][10]...4A"). Nach der Definition dieser Merkmale ist die Restmaske 16 leer (FIG 4).

Durch einen Vergleich der im Rahmen einer Merkmalsdefinition zuerst eingegebenen Teilmengenmaske 12 mit der Basismaske 10 ergibt sich zumindest ein Ausdruck oder eine Gruppe von Ausdrücken, in dem bzw. in denen sich diese von der Basismaske 10 unterscheidet bzw. unterscheiden. Bei einer optionalen Ausführungsform kann vorgesehen sein, dass im Rahmen der mit dieser zuerst eingegebenen Teilmengenmaske 12 begonnenen Merkmalsdefinition nur noch solche weiteren Teilmengenmasken 12 eingegeben werden können, die sich in diesem Ausdruck oder in zumindest einem Ausdruck dieser Gruppe von Ausdrücken von der Basismaske 10 unterscheiden. Durch diese Beschränkung kann automatisch sichergestellt werden, dass sich alle Teilmengenmasken 12 einer Merkmalsdefinition auf dieselbe Position oder dieselben Positionen der Basismaske 10 beziehen.

Die Darstellung in FIG 5 zeigt eine Situation mit einer aufgrund einer Merkmalsdefinition resultierenden Überschneidung. Eine Prüfung auf eine eventuelle Überschneidung findet automatisch im Rahmen jeder Spezifikation einer neuen Teilmengenmaske 12 statt. Beim in FIG 5 dargestellten Beispiel passen die MLFBs "1[LM][MLQPHN][10]...3A" sowie "1[LM][MLQPHN][10]...3B" zu der Teilmengenmaske 12 für die Achshöhe 315 mm und die MLFBs "1[LM][MLQPHN][10]...3A" sowie "1[LM][MLQPHN][10]...4A" zu der Teilmengenmaske 12 für die Achshöhe 355 mm. Die MLFB "1[LM][MLQPHN][10]...3A" ist also nicht eindeutig (nicht widerspruchsfrei), so dass eine Überschneidung der beiden Teilmengenmasken 12 und damit ein Konflikt hinsichtlich der Merkmalsdefinition vorliegt. Der Anwender wird auf eine solche Situation durch eine Warnmeldung oder dergleichen, z.B. einen Farbumschlag bei der Darstellung der beiden von dem Konflikt betroffenen Teilmengenmasken 12 hingewiesen. In der Darstellung in FIG 5 ist dies exemplarisch in Form einer Umrandung der betroffenen Teilmengenmasken 12 gezeigt.

Das Ergebnis der Definition des Produktmerkmals "Achshöhe" sind beim gezeigten Beispiel vier Merkmalswerte 24 ("315", "355", "400" und "450") sowie genau eine Teilmengenmaske 12 zu jedem Merkmalswert 24. Bei einer Definition weiterer Merkmale ergeben sich entsprechend weitere Merkmalswerte 24 und jeweils zugehörige Teilmengenmasken 12. Nachdem zu jedem für ein Produkt denkbaren Merkmal eine solche Merkmalsdefinition vorliegt, ist die Variantenkonfiguration dieses Produkts vollständig. Bei sich später ergebenden Varianten des Produkts kann die Variantenkonfiguration auch ergänzt werden. Z.B. kann eine Erweiterung eines Merkmals erfolgen, um beispielsweise weitere Achshöhen zuzulassen, indem die Basismaske 10 angepasst wird, beispielsweise in einer Form wie "1[LM][MLQPHN][10]...[345][AB]" (dann sind gegenüber bisher vier Achshöhen sechs verschiedene Achshöhen möglich).

Die Gesamtheit der Merkmalswerte 24 und der zu jedem Merkmalswert 24 gehörigen Teilmengenmaske 12 ist zumindest eine widerspruchsfreie Variantenkonfiguration und bei einer Erfassung sämtlicher Produktmerkmale oder zumindest sämtlicher relevanter Produktmerkmale auch eine vollständige, widerspruchsfreie Variantenkonfiguration. Die Gesamtheit der Merkmalswerte 24 und der jeweils zugehörigen Teilmengenmaske 12 bildet eine Datenbasis 26, mittels derer eine zur z.B. im Rahmen eines Bestellvorgangs eingegebene MLFB auf Zulässigkeit geprüft werden kann. Zusätzlich oder alternativ können mittels einer solchen Datenbasis 26 zu einer eingegebenen MLFB alle dadurch kodierten Produktmerkmale ausgegeben werden. Im Rahmen eines Bestellvorgangs kann dem Interessenten dann nach einer Eingabe einer MLFB z.B. eine Liste mit den Merkmalen des durch die MLFB kodierten Produkts angezeigt werden. Der Interessent kann somit den Bestellvorgang überprüfen. Wenn der Interessent einen Elektromotor mit einer Achshöhe von 355 mm bestellen will, wird er bei einer im Rahmen einer solchen Anzeige generierten Ausgabe mit dem Text "Achshöhe 315 mm" auf die tatsächliche Achshöhe des durch die MLFB kodierten Produkts hingewiesen und der Interessent kann seine Bestellung korrigieren. Eventuelle Fehler sind also sehr schnell erkennbar, zumindest leichter erkennbar, als dies durch einen Vergleich der gewünschten MLFB und der eingegebenen MLFB möglich wäre, die sich im vorliegenden Fall nur in der letzten Stelle unterscheiden ("A" bzw. "B").

Die Datenbasis 26 mit den Merkmalswerten 24 und den jeweils zugehörigen Teilmengenmasken 12 ist die nach dem hier vorgeschlagenen Ansatz erstellte Variantenkonfiguration. Diese ist implizit widerspruchsfrei. Die Datenbasis 26 (Variantenkonfiguration) wird in an sich bekannter Art und Weise in einem von dem System 20 zur Variantenkonfiguration umfassten oder für ein solches System 20 erreichbaren Speicher 28 vorgehalten. Als Speicher 28 kommt auch ein entfernter Speicher 28 in Betracht, z.B. ein ggf. auch verteilter und/oder redundanter Speicher 28 in der sogenannten Cloud.

Bei dem System 20 zur Variantenkonfiguration handelt es sich im weitesten Sinne um einen Computer in Form eines Personalcomputers oder dergleichen. Dieser umfasst in an sich bekannter Art und Weise eine Verarbeitungseinheit 30 in Form von oder nach Art eines Mikroprozessors sowie einen Speicher, in den ein Computerprogramm 32 mit einer Implementation des hier vorgeschlagenen Ansatzes zur Variantenkonfiguration geladen ist, welches beim Betrieb des Systems 20 mittels der Verarbeitungseinheit 30 ausgeführt wird.

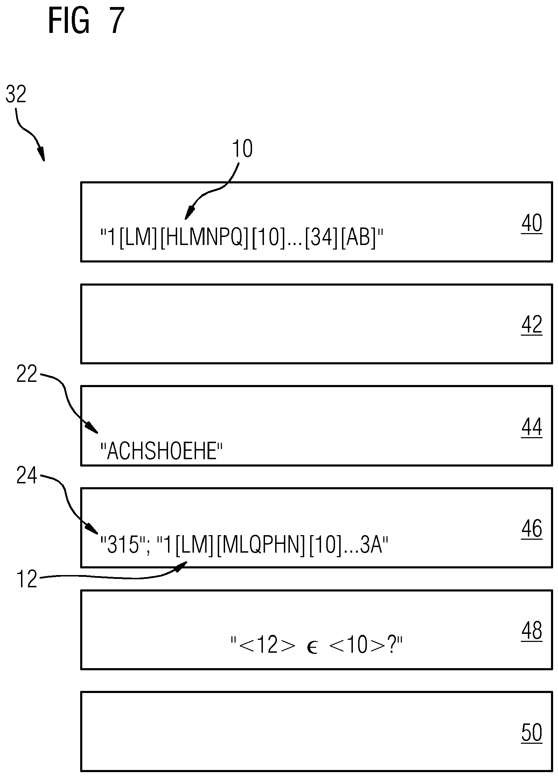

FIG 7 zeigt eine schematisch vereinfachte Darstellung des Computerprogramms 32. In einem ersten Schritt 40 wird eine vorgegebene oder vorgebbare Basismaske 10 (siehe FIG 1) geladen. In einem zweiten Schritt 42 beginnt - z.B. auf eine entsprechende Bedienhandlung eines Anwenders - eine Merkmalsdefinition. In einem dritten Schritt 44 wird ein eindeutiger Bezeichner 22 (siehe FIG 2) für ein Produktmerkmal eingegeben. In einem vierten Schritt 46 werden ein Merkmalswert 24 und zu dem Merkmalswert 24 als regulärer Ausdruck eine Teilmengenmaske 12 eingegeben. In einem fünften Schritt 48 wird geprüft, ob die Teilmengenmaske 12 (der als Teilmengenmaske 12 eingegebene reguläre Ausdruck) eine Teilmenge der durch die Basismaske 10 definierten Menge ist. In der Darstellung ist diese unter Verwendung der Bezugsziffern 10 und 12 durch den Text "<12> ∈ <10> ?" ausgedrückt. Wenn dies der Fall ist, kann die Eingabe des Merkmalswerts 24 und der zugehörigen Teilmengenmaske 12 akzeptiert werden. Wenn nicht, kann die Eingabe für die Teilmengenmaske 12 so lange korrigiert werden, bis die Bedingung erfüllt ist. In einem sechsten Schritt 50 wird zurück zum vierten Schritt 46 verzweigt, um eine Eingabe eines weiteren Merkmalswerts 24 und einer zugehörigen Teilmengenmaske 12 zu ermöglichen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren zur automatischen, computergestützten Variantenkonfiguration eines technischen Produkts und ein nach dem Verfahren arbeitendes System 20, wobei im Rahmen des Verfahrens automatisch geprüft wird, ob ein als Teilmengenmaske 12 zu einem Merkmalswert 24 eingegebener regulärer Ausdruck eine Teilmenge einer durch einen regulären Ausdruck definierten Obermenge ist, wobei als Obermenge eine durch eine Basismaske 10 oder eine durch eine Restmaske 16 definierte Menge betrachtet wird, wobei die durch die Restmaske 16 definierte Menge eine Teilmenge der durch die Basismaske 10 definierten Menge ist, und im Falle eines positiven Ergebnisses der Prüfung der Merkmalswert 24 zusammen mit der Teilmengenmaske 12 in eine Datenbasis 26 mit Merkmalswerten 24 und Teilmengenmasken 12 übernommen wird.

## Patentansprüche

1. Verfahren zur automatischen, computergestützten Variantenkonfiguration eines technischen Produkts, wobei das Verfahren zumindest die folgenden Schritte umfasst:
- Prüfen, ob ein als Teilmengenmaske (12) zu einem Merkmalswert (24) eingegebener regulärer Ausdruck eine Teilmenge einer durch einen regulären Ausdruck definierten Obermenge ist,
- wobei die Obermenge eine durch eine Basismaske (10) oder eine durch eine Restmaske (16) definierte Menge ist,
- wobei die durch die Restmaske (16) definierte Menge eine Teilmenge der durch die Basismaske (10) definierten Menge ist, und
- Übernehmen des Merkmalswerts (24) zusammen mit der Teilmengenmaske (12) in eine Datenbasis (26) mit Merkmalswerten (24) und Teilmengenmasken (12), wenn das Ergebnis der Prüfung positiv ist.

2. Verfahren nach Anspruch 1, wobei nach einer Eingabe einer Teilmengenmaske (12) durch Subtraktion eine Restmaske (16) gebildet wird.

3. Verfahren nach Anspruch 2, wobei die Restmaske (16) gebildet wird, indem die durch die Basismaske (10) definierte Menge um die durch die oder jede Teilmengenmaske (12) definierte Menge vermindert wird und als Restmaske (16) ein die resultierende Restmenge definierender regulärer Ausdruck gebildet wird.

4. Verfahren nach Anspruch 2, wobei die Restmaske (16) gebildet wird, indem als Restmaske (16) anfänglich die Basismaske (10) übernommen wird und nach jeder Eingabe einer Teilmengenmaske (12) die durch die Basismaske (10) definierte Menge um die durch die jeweilige Teilmengenmaske (12) definierte Menge vermindert wird und als Restmaske (16) ein die resultierende Restmenge definierender regulärer Ausdruck gebildet wird.

5. Verfahren nach einem der Ansprüche 2 bis 4, wobei im Falle einer leeren Restmaske (16) keine Eingabe eines weiteren Merkmalswerts (24) und/oder einer zugehörigen Teilmengenmaske (12) mehr möglich ist.

6. Verfahren nach einem der vorangehenden Ansprüche, wobei zu der Basismaske (10) eine Anzahl der mittels der Basismaske (10) kodierbaren Varianten des Produkts angezeigt wird.

7. Verfahren nach einem der Ansprüche 2 bis 6, wobei zu der Restmaske (16) eine Anzahl der mittels der Restmaske (16) kodierbaren Varianten des Produkts angezeigt wird.

8. Verfahren nach einem der vorangehenden Ansprüche, wobei im Falle einer Überschneidung einer durch eine im Rahmen des Verfahrens eingegebenen Teilmengenmaske (12) definierten Menge mit einer durch eine ebenfalls im Rahmen des Verfahrens eingegebenen weiteren Teilmengenmaske (12) definierten Menge ein Warnhinweis ausgegeben wird.

9. Computerprogramm (32) mit Programmcodemitteln, um alle Schritte von jedem beliebigen der Ansprüche 1 bis 8 durchzuführen, wenn das Computerprogramm (32) auf einem System (20) zur Variantenkonfiguration eines technischen Produkts ausgeführt wird.

10. Digitales Speichermedium mit elektronisch auslesbaren Steuersignalen, die so mit einem Computer zusammenwirken können, dass ein Verfahren nach einem der Ansprüche 1 bis 8 ausgeführt wird.

11. System (20) zur Variantenkonfiguration eines technischen Produkts mit einer Verarbeitungseinheit (30) und einem Speicher, in den ein Computerprogramm (32) nach Anspruch 9 geladen ist, das im Betrieb des Systems (20) durch die Verarbeitungseinheit (30) ausgeführt wird.
